# EUROPEAN PATENT SPECIFICATION

(11) **EP 1 360 859 B1**
(45) Date of publication and mention of the grant of the patent: **21.09.2011**
(21) Application number: 01995623.4
(22) Date of filing: 03.11.2001
(51) Int. Cl.: H04W 8/12

(54) **PROCEDURE FOR HANDLING LOCATION INFORMATION IN A CORE NETWORK WITH POOLED SERVERS**
VERFAHREN ZUR BEHANDLUNG VON STANDORTINFORMATIONEN IN EINEM KERNNETZ MIT VIELFACHSERVERN
PROCEDURE DE GESTION D'INFORMATIONS DE LOCALISATION DANS UN RESEAU CENTRAL A SERVEURS GROUPES

(30) Priority: 14.02.2001 EP 01103400
(43) Date of publication of application: 12.11.2003
(73) Proprietor: Telefonaktiebolaget L M Ericsson (publ), 164 83 Stockholm (SE)
(72) Inventor: BASERGA, Aldo, I-22038 Tavernerio (IT); BELLORA, Mauro, I-21013 Gallarate (IT); TURINA, Klaus, 71522 Backnang (DE)
(74) Representative: Tonscheidt, Andreas
(86) International application number: PCT/EP2001/012764
(87) International publication number: WO 2002/065800

(56) References cited:
- WO-A-98/37721
- "Digital cellular telecommunications system; (Phase 2+) (GSM); Universal Mobile Telecommunications System (UMTS); General Packet Radio Service (GPRS); Service description; Stage 2 (3GPP TS 23.060 version 3.6.0 Release 1999)" ETSI TS 123 060 VERSION 3.6.0, January 2001 (2001-01), pages 1-184, XP002198494 cited in the application

## Description

### Field of invention

The invention relates to a procedure for handling location information of a mobile station in a mobile communication network.

### Description of prior art

The evolution of communication networks is undergoing a change from second to third generation networks. Among the characteristics of a third generation network is the possibility of offering different types of connections e.g. based on circuit switched and on packet switched transmission at the same time to a user of a mobile station.

Due to the limited radio coverage area of a single antenna and because of the demand to reuse the limited resource of bandwidth on the air interface, coverage areas of communication networks are divided into cells. In order to be able to page a mobile station in a limited number of such cells, groups of cells are defined, that shall be referred to as subareas. Location information comprising identifications of such subareas related to identifications of mobile stations is stored in network nodes which can be contacted for routing.

As different connection types have different demands on transmission properties and signalling, the demands on the size of the subareas can also differ. For this reason different kinds of subareas may be related to different types of connections. Subareas of a first kind can be related to a first type of connection, e.g. Location Areas for a Global System for Mobile Communication (GSM) network are related to circuit switched connections and subareas of a second kind can be related to a second type of connection, e.g. Routing Areas for a General Packet Radio Service (GPRS) network are related to packet switched connections.

In a telecommunication network different kinds of network nodes can store identifications of the different kinds of subareas e.g. Mobile Services Switching Centres/ Visitor Location Registers (MSC/VLRs) in a GSM network store identifications of Location Areas referred to as Location Area Identities according to GSM specifications and Serving GPRS Support Nodes (SGSNs) store identifications of Routing Areas referred to as Routing Area Identities according to GPRS specifications.

Location information has to be updated frequently. For example, if a mobile station is entering another subarea in idle or active mode or if it has entered another subarea in detached mode and first switches on to idle mode, location information has to be updated in the network node that holds location information related to said mobile station. If the network node that last held the location information related to a detached mobile station has cleared said location information, a new network node that can store location information related to the mobile station has to be determined. In both cases location information comprising an identification of the subarea the mobile station is in has to be transmitted to the network node that is related to the mobile station. The procedure for handling location information of a roaming mobile station in idle mode is a Location Area Update in a GSM network respectively a Routing Area Update in a GPRS network. The procedure for handling location information of a mobile station that has been roaming in detached mode and switches to idle mode is an IMSI Attach in a GSM network respectively a GPRS Attach in a GPRS network.

In a telecommunication network with different kinds of subareas, the procedures for transmitting location information for the different kinds of subareas can be combined in order to save radio resources, especially if subareas of a first kind are enclosed by subareas of another kind. This is applied in a Combined Location Area/ Routing Area Update Procedure respectively in a Combined GPRS/ IMSI Attach Procedure as described in 3G TS 23.060 V3.6.0 of the 3^{rd} Generation Partnership Project. When a mobile station is entering a Routing Area it sends a Routing Area Update Request respectively an Attach Request to the SGSN related to the Routing Area it is in. The request comprises the new Routing Area Identity, the new Location Area Identity and the Packet Temporary Mobile Subscription Identity (P-TMSI), that is used to protect the privacy of the subscriber over the radio interface, if the P-TMSI is available to the mobile station. If the P-TMSI is not available to the mobile station, the International Mobile Subscriber Identity (IMSI) is used instead of the P-TMSI to identify the mobile station.

If the P-TMSI has been sent to the SGSN, the SGSN determines the IMSI related to the P-TMSI. The SGSN stores the Routing Area Identity and sends a Location Update Request to the MSC/VLR related to the Location Area, the request comprising the Location Area Identity and the International Mobile Subscriber Identity (IMSI) related to the mobile station. The MSC/VLR stores the Location Area Identity related to the International Mobile Subscriber Identity.

In a hierarchical network a set of Routing Areas is served by one related SGSN and a set of Location Areas is served by one related MSC/VLR. Therefor, the SGSN can determine on the basis of the Location Area Identity it has received the MSC/VLR to which it sends the Location Update Request. A method to determine in a hierarchical network a MSC/ VLR related to a mobile station by a SGSN related to this mobile station is described in the European Patent Application EP 1 011 275 A1.

If the subareas are small as is the case in urban areas, in a hierarchical network the signalling traffic transferring location information can be a considerable percentage of the overall traffic. If the operator is not allowed to charge signalling, this is also economically disadvantageous.

A fixed relation between subareas and related network nodes is broken up in the Pool Concept that is described in 3G TS 23.236 V2.1.0 of the 3^{rd} Generation Partnership Project. In order to reduce the number of changes of the network node holding location information of a mobile station, in the Pool Concept the area in which said mobile station can roam without changing the network node holding its location information is enlarged. To limit the number of mobile stations that are handled by one network node, subareas are jointly handled by network nodes i.e. different network nodes can store location information related to different mobile stations that are in a certain subarea. Therefore in the Pool concept there is no unique relation from one subarea to its related network nodes and the network node related to a mobile station cannot be determined on the basis of the identification of the subarea the mobile station is in.

This unique relation is used in the combined method to handle location information in a hierarchical network according to state of the art: The SGSN sends the Location Update Request to the MSC/ VLR which is related to the Location Area the mobile station is in. As the MSC/ VLR related to the mobile station cannot be determined based on the Location Area Identity in the Pool Concept, according to the state of the art there is no combined method available to handle location information for networks according to the Pool Concept. Therefore different messages comprising location information related to the different kinds of subareas have to be sent which increases the signalling traffic over the air interface. This is especially disadvantageous due to the limited bandwidth available and due to the high cost related to the licences for the usage of the limited spectrum.

If a fixed relation between a set of SGSNs and one MSC/ VLR would exist, the MSC/ VLR which is related to the mobile station could be determined based on this fixed relation. However this fixed relation between SGSNs and MSC/ VLRs is disadvantageous if the operator wants to change the configuration of the network, e.g. increase the number of MSC/ VLRs independent of the number of SGSNs and the configuration of the SGSNs. Furthermore in a network with a fixed relation between SGSNs and MSC/VLRs in case of a downtime or failure of a SGSN, the related MSC/VLR cannot be reached either. I.e. the a network with a fixed relation of between SGSNs and MSC/VLRs is less reliable than a network according to the Pool Concept.

### Object of the invention

Therefore it is an object of the invention to avoid the above disadvantages and provide a method for a combined handling of location information according to subareas of different kinds in which different nodes can handle location information for a mobile station in the same subarea.

### Summary of the invention

This object is solved by the method of claim 1 the network nodes of claim 14 and 15, the computer program of claim 16 and the computer program storage medium of claim 17. Advantageous embodiments are described in dependent claims.

According to the present invention a mobile station MS is roaming in the coverage area of a mobile communication network in which two different kinds of subareas exist, which are referred to as subareas of the first kind and subareas of the second kind. Network nodes store location information i.e. an identification of a subarea related to an identification of a mobile station MS. The mobile station MS is in a subarea of the first kind which is referred to as the first subarea RA1 and in a subarea of a second kind which is referred to as the second subarea LA1. Different network nodes are adapted to store location information comprising an identification of the first and of the second subarea LA1. Among the network nodes that can store location information a controlling network node CN1 that is adapted to store an identification of the first subarea RA1 is related to the mobile station MS. For example the controlling network node CN1 can either store an identification of a subarea of the first kind related to the mobile station MS or the controlling network node CN1 related to the mobile station MS is determined by a radio network node that is related to the first subarea RA1. Either the controlling network node CN1 is uniquely adapted to store location information according to the first subarea RA1 or the controlling network node CN1 is a member of a set of network nodes that are adapted to store location information according to the first subarea RA1.

Among the network nodes that store location information a set of network nodes related to the second subarea LA1 can store location information comprising an identification of the second subarea LA1.

A second network node stores an identification of a subarea of the second kind related to the mobile station MS. A central location register CLR holds an identification of the second network node related to the mobile station MS.

In the proposed method a request to handle location information is sent to the controlling network node CN1, the request comprising an identification of the mobile station MS and information from which the identification of the first subarea RA1 and the identification of the second subarea LA1 are derivable. The identification of the first subarea RA1 is derived from the request to handle location information, preferably by the controlling network node CN1, and stored related to the mobile station MS by the controlling network node CN1. The central location register CLR is requested for the identification of the second network node. The request can comprise an identification of the mobile station MS. The request can be for example sent by the controlling network node CN1. The identification of the second network node is sent to the controlling network node CN1. A network node of the set of network nodes related to the second subarea LA1 is determined according to the identification of the second network node by the controlling network node CN1. The determined network node BN1 is requested to store location information, preferably by the controlling network node CN1. The request comprises an identification of the mobile station MS and the identification of the second subarea LA1. The identification of the second subarea LA1 is stored related to an identification of the mobile station MS by the determined network node BN1.

An identification of the mobile station MS can be either a temporary identification or a permanent identification. A temporary identification of a mobile station MS can be translated into another temporary identification or a permanent identification e.g. according to a rule or a look-up-table by any of the above network nodes. Likewise a permanent identification can be translated into a temporary identification.

It is advantageous that the method can be applied to a network architecture that allows larger areas in which the mobile subscriber can roam without changing the network nodes storing location information related to it. This has the advantage of a considerably lower signalling traffic transferring location information compared to the signalling traffic in a hierarchical network. Reduced signalling traffic is economically advantageous for the operator of the communication network especially if the operator is not allowed to charge signalling traffic as in a GSM-, a GPRS- or a UMTS-network. Further advantageous is that the proposed method only requires one message over the air interface for handling different kinds of location information. This is an economic use of the limited resource of radio bandwidth. This is economically advantageous for the operator, as transmission costs over the air interface are high.

If the identification of the second subarea LA1 can be derived from the identification of the first subarea RA1, only the identification of the first subarea RA1 has to be transmitted in the request to the controlling network node CN1. Thus the number of bits that have to be transmitted over the air interface is reduced. An example is the case that the second subarea LA1 encloses the first subarea RA1. Then the identification of the first subarea RA1 can be composed of the identification the second subarea LA1 and an additional code.

The determined network node BN1 can be for example the second network node. As the second network node already stores location information related to the mobile station MS, this reduces the signalling traffic to the determined network node BN1. Determining the second network node can also be implemented easily and is computationally efficient.

Different sets of network nodes may be related to different sets of subareas of the second kind. I.e. second subareas may exist that cannot be served by the second network node. In this case the following steps can be performed: The controlling node checks whether the second network node belongs to the set of network nodes related to the second subarea LA 1. If the second network node belongs to the set of network nodes related to the second subarea LA1, the second network node is chosen as the determined network node. If the second network node does not belong to the set of network nodes related to the second subarea LA1 or if the second network node is not reachable, the determined network node BN1 is selected from the set of network nodes related to the second subarea LA1. An identification of the determined network node BN1 is sent to the central location register CLR. The central location register CLR stores the identification of the determined network node BN1. It is advantageous that the method can also be applied to a network in which not all network nodes can serve a certain subarea. The above selection of the determined network node BN1 can be based on a distance to a radio network node that is related to the second subarea LA1, e.g. the geographical distance. A determined network node BN1 near the radio network node reduces the transmission cost for signalling and payload traffic. A further example for the distance is the number of network nodes that are intermediary between the radio network node and the determined network node BN1 i.e. a small number of intermediary network nodes reduces the needed switching capacity for signalling and payload traffic.

Further advantageous is the selection of different determined network nodes for different mobile stations in the same subarea in order to distribute the traffic load originating from a certain subarea.

In order to avoid recurrent requests of the central location register CLR for the identification of the second network node, it is advantageous to store the identification of the determined network node BN1 by the controlling network node CN1. After receiving a further request to handle location information the controlling network node CN1 can send a further request to store location information to the determined network node BN1 of which the identification has been stored. The determined network node BN1 then stores location information related to the mobile station MS. Avoiding recurrent requests to the central location register CLR reduces the transmission costs for a request to the central location register CLR.

Transmission costs are especially high if the central location register CLR is located in a different communication network which needs to be contacted by the present one.

The proposed methods can be easily implemented in an existing GPRS network. In this case the controlling network node CN1 is a Serving GPRS Support Node in the GPRS network, the first subarea RA1 is a Routing Area of the GPRS network, and the identification of the first subarea RA1 is a Routing Area Identity.

Another application on an existing network where the proposed methods can easily be implemented is a UMTS network:

Further advantageous is the application of the proposed methods in a GSM network with a Mobile Services Switching Centre/ Visitor Location Register as the second network node, a Location Area of the GSM network as the second subarea LA1, and its Location Area Identity as the identification of the second subarea LA1.

The International Mobile Subscriber Identity (IMSI), the Temporary Mobile Subscriber Identity (TMSI), or the Packet Temporary Mobile Subscriber Identity (P-TMSI) can be easily used as an identification of the mobile station MS.

As the Home Location Register (HLR) already holds identifications of MSC/ VLRs related to mobile stations it can easily be used as central location register CLR.

Further advantageous is the usage of the proposed methods during a Combined GPRS/IMSI Attach procedure or a Combined Location Area/ Routing Area Update procedure.

It is advantageous to adapt a controlling network node CN1 in a way that it performs the steps of an above described method which are related to the controlling network node CN1. The controlling network node CN1 comprises a reception unit for receiving messages, a processing unit for processing information and messages, and a transmission unit for sending messages. The reception unit is adapted to receive a request 1 to handle location information, the, request comprising an identification of a mobile station MS and information from which an identification of a first subarea RA1 and an identification of a second subarea LA1 are derivable. The processing unit is adapted to derive the identification of the first subarea RA1 from the request to handle location information and to store the identification of the first subarea RA1 related to the mobile station MS. The transmission unit is adapted to send a request 2 for an identification of a second network node to a central location register CLR. The reception unit is adapted to receive the identification of the second network node. The processing unit is adapted to determine a network node BN1 from a set of network nodes related to the second subarea LA1 according to the identification of the second network node. The transmission unit is adapted to send a request 4 to store the identification of the second subarea LA1 related to the mobile station MS tp the determined network node BN1.

It is advantageous to adapt a central location register CLR in a way that it performs the steps of an above described method which are related to the central location register CLR. The central location register CLR comprises a receiver for receiving messages, a storage unit for storing identities of network nodes, a central processing unit for processing information and messages, and a transmitter for sending messages. The receiver is adapted to receive a request 2 from a controlling network node CN1 that is adapted to store an identification of a first subarea RA1 of a first kind for an identification of a second network node that is adapted to store an identification of a second subarea LA1 of a second kind. The processing unit is adapted to retrieve the identification of the second network node from the storage unit. The transmitter is adapted to send the identification of the second network node to the controlling network node CN1.

It is easy to implement the adaptation of the controlling network node CN1 or the central location register CLR using a software program controlling the controlling network node CN1 or the central location register CLR.

Said software program can be distributed easily if it is stored on a computer program storage medium.

### Brief description of the drawings

Fig. 1 shows the structure of a location area that is composed of different routing areas.
Fig. 2 shows an architecture and a signal flow for use of the invented method.

### Detailed description of embodiments

In the following the invention is described in more detail by means of an embodiment and figures.

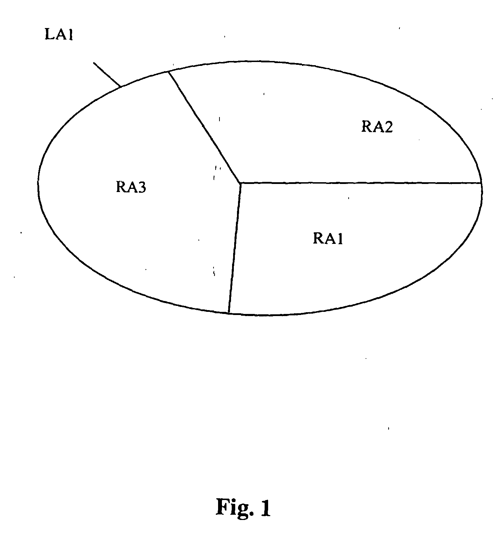

Figure 1 depicts the structure of a Location Area LA1 that is divided into the Routing Areas RA1, RA2, and RA3. The following example describes the application of the inventive method in the context of a combined procedure for updating location information of a mobile station MS that is connected to a GPRS network and a GSM network at the same time. The procedure can be a part of a Combined Routing Area/ Location Area Update Procedure or part of a Combined GPRS/ IMSI Attach Procedure. The coverage area of the GSM network is divided into Location Areas and the coverage area of the GPRS network is divided into Routing Areas. Each Location Area is divided into one or more Routing Areas. Routing Area Identities are used for identifying Routing Areas and Location Area Identities are used for identifying Location Areas. A Routing Area Identity is a code that is composed of a Location Area Identity plus a Routing Area Code. Thus the Location Area Identity can be derived from the related Routing Area Identity. Each Location Area is divided into one or more Routing Areas, so that an update of the Location Area Identity can be triggered by an update of the Routing Area Identity.

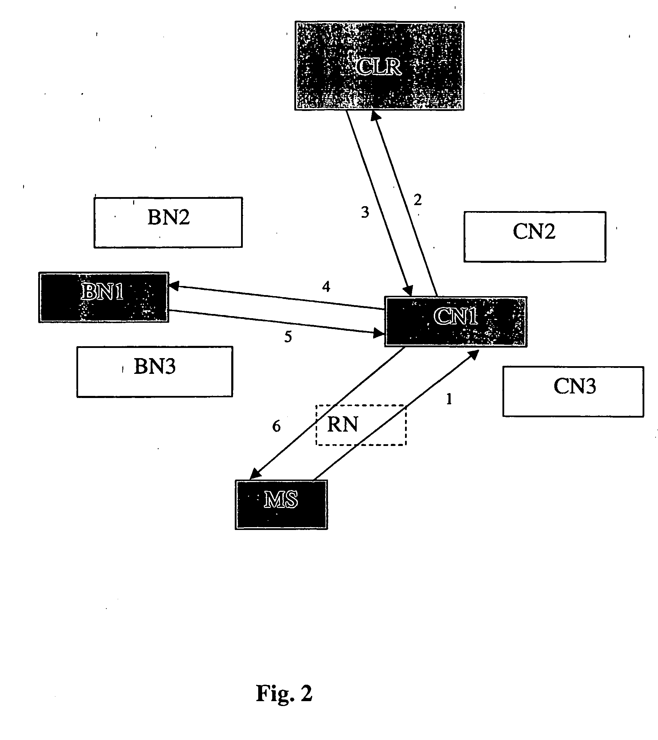

Figure 2 depicts a mobile station MS in a communication network that is connected to a network node CN1 via a radio network node RN. The identity of the Routing Area the mobile station MS is in can be stored related to the mobile station by the network nodes CN1, CN2, and CN3. The network nodes BN1, BN2, and BN3 are related to the Location Area the mobile station MS is in. The Central Location Register CLR, holds an identification of a network node related to the mobile station. The proposed method comprises a sequence of messages and processing steps. The messages exchanged between the network nodes respectively between the network nodes and the mobile station are depicted as arrows. The Central Location Register CLR can be for example a Home Location Register (HLR)_{.}

In order to be able to page the mobile station in the Routing Area it is in, a Routing Area Identity is stored in a Serving GPRS Support Node (SGSN) related to the mobile station MS. In the same way a Location Area Identity is stored in relation to the mobile station by a Mobile Services Switching Centre/Visitor Location Register (MSC/VLR). Sets of SGSNs and sets of MSC/VLRs are pooled resources for sets of Location Areas and sets of Routing Areas respectively. The network nodes CN1, CN2 and CN3 belong to the set of SGSNs related to the Routing Area RA1. The network nodes BN1, BN2 and BN3 belong to the set of MSC/VLRs related to the Location Area LA1. An identification of the MSC/VLR related to the mobile station is stored by a Central Location Register CLR, e.g. an HLR.

The method is applicable to a Combined Routing Area/ Location Area Update as well as to a Combined GPRS/ IMSI Attach. The request 1 is a Combined Routing Area/ Location Area Update Request in the first case and a Combined GPRS/ IMSI Attach Request in the latter case.

First the Scenario of a Combined GPRS/ IMSI Attach according to the proposed method shall be described. The mobile station MS has been roaming in detached mode and thereby entering a new Routing Area RA1. In order to attach to both the GPRS network and the GSM network the mobile station initiates a Combined GPRS/ IMSI Attach. If the new Routing Area RA1 is related to the same set of SGSNs as the old Routing Area, a Combined GPRS/ IMSI Attach Request 1 is sent to that SGSN which stores the old Routing Area Identity related to the old Routing Area the MS has been in. The request 1 comprises the Routing Area Identity RAI1. The request 1 is sent via the radio network node RN that is related to the new Routing Area RA1. If the new Routing Area RA1 cannot be served by the SGSN that stores the old Routing Area Identity, the radio network node RN selects a new SGSN among the set of SGSNs related to the Routing Area RA1 and the Combined GPRS/ IMSI Attach Request 1 is sent via the radio network node RN to the selected SGSN. The SGSN to which the Combined GPRS/ IMSI Attach Request 1 is sent is referred as network node CN1.

In the scenario of Combined Routing Area/ Location Area Update the mobile station MS is attached to both the GPRS network and the GSM network and the mobile station MS is entering the new Routing Area RA1. If the new Routing Area RA1 is related to the same set of SGSNs as the old Routing Area, a Combined Routing Area/ Location Area Update Request 1 is sent to that SGSN which stores the old Routing Area Identity related to the old Routing Area the MS has been in. The request 1 comprises the Routing Area Identity RAI1. The request 1 is sent via the radio network node RN that is related to the new Routing Area RA1. If the new Routing Area RA1 cannot be served by the SGSN that stores the old Routing Area Identity, a radio network node RN that is related to the new Routing Area RA1 selects a new SGSN among the set of SGSNs related to the Routing Area RA1 and the Combined Routing Area/ Location Area Update Request 1 is sent via the radio network node RN to the selected SGSN. The SGSN to which the Combined Routing Area/ Location Area Update Request 1 is sent to is referred as network node CN1.

The Routing Area Identity RAI1 is composed of a Location Area Identity LAI1 and a Routing Area Code RAC 1. The Routing Area Identity RAI1 is stored related to the IMSI related to the mobile station MS by the network node CN1. The request 1 additionally comprises either the Packet Temporary Mobile Subscription Identity (P-TMSI), related to the mobile station or the International Mobile Subscriber Identity (IMSI) related to the mobile station. If the request has comprised the P-TMSI related to the mobile station MS, the network node CN1 translates the P-TMSI related to the mobile station into the IMSI related to the mobile station.

The network node CN1 sends a request 2 for the ISDN number E.164 of the MSC related to the mobile station MS and the ISDN number E.164 of the VLR related to the mobile station MS to the Central Location Register CLR that is related to the mobile station. The request comprises the IMSI related to the mobile station. The ISDN number E.164 of the MSC related to the mobile station MS shall be referred to as MSC address and the ISDN number E.164 of the VLR related to the network node BN1 shall be referred to as VLR number. The Central Location Register CLR responds to the network node CN1 with a message 3 comprising the MSC address and the VLR number of the network node BN1.

The messages 2 and 3 can be the request and the response of a new MAP message according to the Mobile Application Part (MAP) specification ETSI TS 100 974 V7.5.0 of the Global System for Mobile Communications (GSM). An example for such a new MAP message is described in table 1. The new MAP message can either be a request 2 from the network node CN1 to the Central Location Register CLR, an indication from the Central Location Register CLR to the network node CN1, the response 3 to said request from the Central Location Register CLR to the network node CN1, or a confirmation from the network node CN1 to the Central Location Register CLR. In the first column the parameters according to the MAP specifications ETSI TS 100 974 V7.5.0 of the GSM that are contained in the messages request, indication, response, and confirm are listed. The entries in the table indicate, which of the parameters are transmitted with the messages related to the respective column. Mandatory parameters are marked with M, conditional parameters are marked with C. Parameters of which the inclusion is an option of the service provider of the Central Location Register CLR is marked with O. The entry (=) indicates that the parameter transmitted in the related message should be identical to the parameter that is specified in the column left of the entry (=).

In an alternative embodiment the request only comprises an Invoke Id and the IMSI and the response only comprises said Invoke Id and the VLR number.

**Tab. 1: Proposed MAP message**

| **Parameter name** | **Request** | **indication** | **Response** | **Confirm** |
|---|---|---|---|---|
| Invoke Id | M | M(=) | M(=) | M(=) |
| IMSI | M | M(=) | | |
| SGSN number | M | M(=) | | |
| SGSN address | M | M(=) | | |
| | | | | |
| | | | | |
| MSC Address | | M | M | |
| VLR number | | M | M | |
| HLR number | | C | C | C(=) |
| User error | | | C | C(=) |
| Provider error | | | | O |

After the reception of the message 3 the network node CN1 checks whether the MSCNLR whose VLR number was returned by the Central Location Register CLR belongs to the set of MSC/VLRs related to the Location Area LA1. If the MSC/ VLR whose VLR number was returned by the Central Location Register CLR belongs to said set of MSC/ VLRs, a Location Update Request 4 is sent to this MSC/ VLR. In order to address the MSCNLR, the VLR number that has been returned by the Central Location Register CLR is translated to a Pointcode according to the CCITT Signalling System No. 7. If the MSC/ VLR does not belong to said set of MSC/ VLRs, a MSC/ VLR that belongs to said set of MSC/ VLRs is chosen according to a load distribution algorithm and the Location Update Request 4 is sent to the chosen MSC/ VLR. The MSC/ VLR to which the Location Update Request 4 is sent is referred to as network node BN1. The Location Update Request 4 comprises the Location Area Identity LAI1 and the IMSI. If a new MSC/ VLRs has been chosen, a new Temporary Mobile Subscriber Identity (TMSI) related to the mobile station is assigned. In order to be able to send a further Location Update Request to the MSC/ VLR related to the mobile station without asking the Central Location Register CLR for the VLR number and the MSC address, the received VLR number and the MSC address that have been returned by the Central Location Register CLR respectively the VLR number and the MSC address relating to the chosen MSCNLR are stored by the network node CN1.

The network node BN1 sends a Location Update Accept message 5 back to the network node CN1. The message 5 can optionally comprise the new TMSI.

In the case of Combined Routing Area/ Location Area Update Procedure the mobile station MS is informed that location information was correctly updated by sending a Routing Area Update Accept message to the mobile station MS. In the case of a Combined GPRS/ IMSI Attach Procedure, the mobile station MS is informed that the procedure was successful in an Attach Accept message. Both the Routing Area Update Accept message and the Attach Accept message are depicted as message 6.

The above embodiment admirably achieves the object of the invention. However, it will be appreciated that departures can be made by those skilled in the art without departing from the scope of the invention which is limited only by the claims.

## Claims

1. Method for handling location information of a mobile station (MS) in a communication network in which location information is stored according to subareas of the communication network by network nodes and a first and a second kind of subareas exist, wherein the mobile station is in a first subarea (RA1) of the first kind and in a second subarea (LA1) of the second kind, a set of network nodes related to the second subarea is adapted to store an identification of the second subarea, a controlling network node (CN1) that is adapted to store an identification of the first subarea is related to the mobile station, and a central location register (CLR) holds an identification of a second network node storing an identification of a subarea of the second kind related to the mobile station (MS), the method comprising the steps of
- requesting (1) the controlling network node to handle location information, the request comprising an identification of the mobile station (MS) and information from which the identification of the first subarea (RA1) and the identification of the second subarea (LA1) are derivable,
- deriving the identification of the first subarea (RA1) from the request to handle location information,
- storing the identification of the first subarea (RA1) related to the mobile station (MS) by the controlling network node (CN1),
- requesting (2) the central location register (CLR) for the identification of the second network node, the request comprising an identification of the mobile station (MS),
- in the central location register (CLR) determining the identification of the second network node that is related to the mobile station
- sending (3) the identification of the second network node to the controlling network node (CN1),
- determining a network node (BN1) from the set related to the second subarea according to the identification of the second network node by the controlling network node (CN1)
- requesting (4) the determined network node (BN1) to store the identification of the second subarea (LA1) related to the mobile station (MS), and
- storing the identification of the second subarea (LA1) related to the mobile station (MS) by the determined network node (BN1).

2. Method according to claim 1 wherein the request (1) to handle location information comprises the identification of the first subarea (RA1) and the identification of the second subarea (LA1) is derived from the identification of the first subarea (RA1).

3. Method according to claim 1 or 2, wherein the determined network node (BN1) is the second network node.

4. Method according to claim 1 or 2, comprising the following steps:
- checking whether the second network node is part of the set of network nodes related to the second subarea,
- selecting a network node from the set of network nodes related to the second subarea as the determined network node (BN1), if the second network node is not part of the set of network nodes related to the second subarea or if the second network node is not reachable,
- sending an identification of the determined network node (BN1) to the central location register (CLR), and
- storing the identification of the determined network node (BN1) by the central location register (CLR).

5. Method according to claim 4, wherein a radio network node (RN) is related to the second subarea and the selection of the determined network node (BN1) is made according to a distance between the radio network node (RN) and the determined network node (BN1).

6. Method according to any of the claims 4 to 5, wherein different determined network nodes are selected for different mobile stations in the second subarea.

7. Method according to any of the claims 1 to 6 comprising the following steps :
- storing the identification of the determined network node (BN1) related to the mobile station (MS) by the controlling network node,
- receiving a further request to handle location information by the controlling network node,
- sending a further request to store the identification of the second subarea (LA1) related to the mobile station (MS) to the determined network node (BN1) by the controlling network node, and
- storing the identification of the second subarea (LA1) related to the mobile station (MS) by the determined network node (BN1).

8. Method according to any of the claims 1 to 7, wherein
the controlling network node (CN1) is a Serving GPRS Support Node in a GPRS network,
the first subarea (RA1) is a Routing Area of the GPRS network, and
the identification of the first subarea (RA1) is a Routing Area Identity.

9. Method according to any of the claims 1 to 8, wherein the communication network is a UMTS network.

10. Method according to any of the claims 1 to 9, wherein
the second network node (BN1) is a Mobile Services Switching Centre/ Visitor Location Register in a GSM network,
the second subarea (LA1) is a Location Area of the GSM network, and
the identification of the second subarea (LA1) is a Location Area Identity.

11. Method according to any of the claims 8 to 10 wherein the identification of the mobile station is an International Mobile Subscriber Identity, a Temporary Mobile Subscriber Identity or a Packet Temporary Mobile Subscriber Identity.

12. Method according to any of the claims 8 to 11, wherein the central location register (CLR) is a Home Location Register.

13. Method according to any of the claims 8 to 12, wherein said method is performed during a Combined GPRS/IMSI Attach procedure or a Combined Location Area/ Routing Area Update procedure.

14. Controlling network node (CN1) comprising a reception unit for receiving messages, a processing unit for processing information and messages, and a transmission unit for sending messages, wherein the reception unit is adapted to receive a request (1) to handle location information, the request comprising an identification of a mobile station (MS) and information from which an identification of a first subarea (RA1) of a first kind and an identification of a second subarea (LA1) of a second kind are derivable, the processing unit is adapted to derive the identification of the first subarea (RA1) from the request (1) to handle location information and to store the identification of the first subarea (RA1) related to the mobile station (MS), the transmission unit is adapted to send a request (2) for an identification of a second network node to a central location register (CLR), the request comprising the identification of the Mobile station (MS), the reception unit is adapted to receive (3) the identification of the second network node, the processing unit is adapted to determine a network node (BN1) from a set of network nodes related to the second subarea (LA1) according to the identification of the second network node, and the transmission unit is adapted to send a request (4) to store the identification of the second subarea (LA1) related to the mobile station (MS) to the determined network node (BN1).

15. Central location register (CLR) comprising a receiver for receiving messages, a storage unit for storing identities of network nodes related to mobile stations, a central processing unit for processing information and messages, and a transmitter for sending messages, wherein the receiver is adapted to receive a request (2) from a controlling network node (CN1) that is adapted to store an identification of a first subarea (RA1) of a first kind for an identification of a second network node that is adapted to store an identification of a second subarea (LA1) of a second kind , the request comprising an identification of a mobile station (MS) being in the first and in the second subarea, the processing unit is adapted to retrieve the identification of the second network node that is related to the mobile station from the storage unit, and the transmitter is adapted to send (3) the identification of the second network node to the controlling network node (CN1).

16. Computer program arranged to control a controlling network node (CN1) in a way that it performs the steps of:
- receiving a request (1) to handle location information, the request comprising an identification of a mobile station (MS) being in a first subarea of a first kind and in a second subarea of a second kind and the request comprising information from which an identification of the first subarea (RA1) and an identification of the second subarea (LA1) are derivable, .
- deriving the identification of the first subarea (RA1) from the request (1) to handle location information,
- storing the identification of the first subarea (RA1) related to the mobile station (MS),

17. Computer program arranged to control a central location register (CLR) in a way that it performs the steps of:
- receiving from a controlling network node (CN1) that is adapted to store an identification of a first subarea (RA1) of a first kind a request (2) for an identification of a second network node storing an identification of a subarea of a second kind related to a mobile station being in the first subarea and in a second subarea of a second kind, the request comprising an identification of the mobile station (MS),
- determining the identification of the second network node that is related to the mobile station, and
- sending (3) the identification of the second network node towards the controlling network node (CN1).

18. Computer program storage medium storing a computer program according to claim 16 or 17.

## Patentansprüche

1. Verfahren zur Handhabung von Aufenthaltsinformationen einer Mobilstation (MS) in einem Kommunikationsnetz, in welchem Aufenthaltsinformationen gemäß Teilbereichen des Kommunikationsnetzes durch Netzknoten gespeichert werden und eine erste und eine zweite Art von Teilbereichen vorhanden sind, wobei die Mobilstation in einem ersten Teilbereich (RA1) der ersten Art und in einem zweiten Teilbereich (LA1) der zweiten Art ist, ein Satz von Netzknoten, der mit dem zweiten Teilbereich in Beziehung steht, so ausgelegt ist, dass er eine Kennung des zweiten Teilbereichs speichert, ein Steuernetzknoten (CN1), der so ausgelegt ist, dass er eine Kennung des ersten Teilbereichs speichert, mit der Mobilstation in Beziehung steht, und ein zentrales Lokalisierungsregister (CLR) eine Kennung eines zweiten Netzknoten enthält, der eine Kennung eines Teilbereichs der zweiten Art speichert, der mit der Mobilstation (MS) in Beziehung steht, wobei das Verfahren die folgenden Schritte umfasst:
- Auffordern (1) des Steuernetzknotens zur Handhabung von Aufenthaltsinformationen, wobei die Aufforderung eine Kennung der Mobilstation (MS) und Informationen umfasst, von welchen die Kennung des ersten Teilbereichs (RA1) und die Kennung des zweiten Teilbereichs (LA1) abgeleitet werden können,
- Ableiten der Kennung des ersten Teilbereichs (RA1) von der Aufforderung zur Handhabung von Aufenthaltsinformationen,
- Speichern der Kennung des ersten Teilbereichs (RA1), der mit der Mobilstation (MS) in Beziehung steht, durch den Steuernetzknoten (CN1),
- Auffordern (2) d e s zentralen Lokalisierungsregisters (CLR) für die Kennung des zweiten Netzknotens, wobei die Aufforderung eine Kennung der Mobilstation (MS) umfasst,
- Bestimmen im zentralen Lokalisierungsregister (CLR) der Kennung des zweiten Netzknotens, der mit der der Mobilstation (MS) in Beziehung steht,
- Senden (3) der Kennung des zweiten Netzknotens an den Steuernetzknoten (CN1),
- Bestimmen eines Netzknotens (BN1) aus dem Satz, der mit dem zweiten Teilbereich in Beziehung steht, gemäß der Kennung des zweiten Netzknotens durch den Steuernetzknoten (CN1),
- Auffordern (4) des bestimmten Netzknotens (BN1) zur Speicherung der Kennung des zweiten Teilbereichs (LA1), der mit der Mobilstation in Beziehung steht, und
- Speichern der Kennung des zweiten Teilbereichs (LA1), der mit der Mobilstation (MS) in Beziehung steht, durch den bestimmten Netzknoten (CN1).

2. Verfahren nach Anspruch 1, wobei die Aufforderung (1) zur Handhabung von Aufenthaltsinformationen die Kennung des ersten Teilbereichs (RA1) umfasst, und die Kennung des zweiten Teilbereichs (LA1) von der Kennung des ersten Teilbereichs (RA1) abgeleitet wird.

3. Verfahren nach Anspruch 1 oder 2, wobei der bestimmte Netzknoten (BN1) der zweite Netzknoten ist.

4. Verfahren nach Anspruch 1 oder 2, umfassend die folgenden Schritte:
- Prüfen, ob der zweite Netzknoten zu dem Satz von Netzknoten gehört, die mit dem zweiten Teilbereich in Beziehung stehen,
- Auswählen eines Netzknotens aus dem Satz von Netzknoten, die mit dem zweiten Teilbereich in Beziehung stehen, als den bestimmten Netzknoten (BN1), wenn der zweite Netzknoten nicht zu dem Satz von Netzknoten gehört, die mit dem zweiten Teilbereich in Beziehung stehen, oder wenn der zweite Netzknoten nicht erreicht werden kann,
- Senden einer Kennung des bestimmten Netzknotens (BN1) an das zentrale Lokalisierungsregister (CLR), und
- Speichern der Kennung des bestimmten Netzknotens (BN1) durch das zentrale Lokalisierungsregister (CLR).

5. Verfahren nach Anspruch 4, wobei ein Funknetzknoten (RN) mit dem zweiten Teilbereich in Beziehung steht, und die Auswahl des bestimmten Netzknotens (BN1) gemäß einer Distanz zwischen dem Funknetzknoten (RN) und dem bestimmten Netzknoten (BN1) erfolgt.

6. Verfahren nach einem der Ansprüche 4 bis 5, wobei verschiedene bestimmte Netzknoten für verschiedene Mobilstationen im zweiten Teilbereich ausgewählt werden.

7. Verfahren nach einem der Ansprüche 1 bis 6, umfassend die folgenden Schritte:
- Speichern der Kennung des bestimmten Netzknotens (BN1), der mit der Mobilstation (MS) in Beziehung steht, durch den Steuernetzknoten,
- Empfangen einer ersten Aufforderung zur Handhabung von Aufenthaltsinformationen durch den Steuernetzknoten,
- Senden einer weiteren Aufforderung zur Speicherung der Kennung des zweiten Teilbereichs (LA1), der mit der Mobilstation (MS) in Beziehung steht, an den bestimmten Netzknoten (BN1) durch den Steuernetzknoten, und
- Speichern der Kennung des zweiten Teilbereichs (LA1), der mit der Mobilstation (MS) in Beziehung steht, durch den bestimmten Netzknoten (BN1).

8. Verfahren nach einem der Ansprüche 1 bis 7, wobei
der Steuernetzknoten (CN1) ein versorgender GPRS-Unterstützungsknoten in einem GPRS-Netz ist,
der erste Teilbereich (RA1) ein Weiterleitungsgebiet des GPRS-Netzes ist, und
die Kennung des ersten Teilbereichs (RA1) eine Weiterleitungsgebietskennung ist.

9. Verfahren nach einem der Ansprüche 1 bis 8, wobei das Kommunikationsnetz ein UMTS-Netz ist.

10. Verfahren nach einem der Ansprüche 1 bis 9, wobei
der zweite Netzknoten (BN1) eine Mobildienste-Vermittlungsstelle/ein Besucherregister in einem GSM-Netz ist,
der zweite Teilbereich (LA1) ein Aufenthaltsgebiet des GPRS-Netzes ist, und
die Kennung des zweiten Teilbereichs (LA1) eine Aufenthaltsgebietskennung ist.

11. Verfahren nach einem der Ansprüche 8 bis 10, wobei die Kennung der Mobilstation eine internationale Mobilteilnehmerkennung, eine temporäre Mobilteilnehmerkennung oder eine temporäre Paket-Mobilteilnehmerkennung ist.

12. Verfahren nach einem der Ansprüche 8 bis 11, wobei das zentrale Lokalisierungsregister (CLR) ein Heimatregister ist.

13. Verfahren nach einem der Ansprüche 8 bis 12, wobei das Verfahren während einer kombinierten GPRS/IMSI-Anschlussprozedur oder einer kombinierten Aufenthaltsgebiets-/Weiterleitungsgebiets-Aktualisierungsprozedur durchgeführt wird.

14. Steuernetzknoten (CN1), umfassend eine Empfangseinheit zum Empfangen von Nachrichten, eine Verarbeitungseinheit zum Verarbeiten von Informationen und Nachrichten und eine Sendeeinheit zum Senden von Nachrichten, wobei die Empfangseinheit so ausgelegt ist, dass sie eine Aufforderung (1) zur
Handhabung von Aufenthaltsinformationen empfängt, die Aufforderung eine Kennung einer Mobilstation (MS) und Informationen umfasst, von welchen eine Kennung eines ersten Teilbereichs (RA1) einer ersten Art abgeleitet wird und eine Kennung eines zweiten Teilbereichs (LA1) einer zweiten Art abgeleitet werden können, die Verarbeitungseinheit so ausgelegt ist, dass sie die Kennung des ersten Teilbereichs (RA1) von der Aufforderung (1) zur Handhabung von Aufenthaltsinformationen ableitet und die Kennung des ersten Teilbereichs (RA1) speichert, der mit der Mobilstation (MS) in Beziehung steht, die Sendeeinheit so ausgelegt ist, dass sie eine Aufforderung (2) für eine Kennung eines zweiten Netzknotens an ein zentrales Lokalisierungsregister (CLR) sendet, die Aufforderung die Kennung der Mobilstation (MS) umfasst, die Empfangseinheit so ausgelegt ist, dass sie die Kennung des zweiten Netzknotens empfängt (3), die Verarbeitungseinheit so ausgelegt ist, dass sie einen Netzknoten (BN1) aus einem Satz von Netzknoten, die mit dem zweiten Teilbereich (LA1) in Beziehung stehen, gemäß der Kennung des zweiten Netzknotens bestimmt, und die Sendeeinheit so ausgelegt ist, dass sie eine Aufforderung (4) zur Speicherung der Kennung des zweiten Teilbereichs (LA1), der mit der Mobilstation (MS) in Beziehung steht, an den bestimmten Knoten (BN1) sendet.

15. Zentrales Lokalisierungsregister (CLR), umfassend einen Empfänger zum Empfangen von Nachrichten, eine Speichereinheit zum Speichern von Kennungen von Netzknoten, die mit Mobilstationen in Beziehung stehen, eine zentrale Verarbeitungseinheit zum Verarbeiten von Informationen und Nachrichten und einen Sender zum Sender von Nachrichten, wobei der Empfänger so ausgelegt ist, dass er eine Aufforderung (2) von einem Steuernetzknoten (CN1), der so ausgelegt ist, dass er eine Kennung eines ersten Teilbereichs (RA1) einer ersten Art speichert, für eine Kennung eines zweiten Netzknotens empfängt, der so ausgelegt ist, dass er eine Kennung eines zweiten Teilbereichs (LA1) einer zweiten Art speichert, wobei die Aufforderung eine Kennung einer Mobilstation (MS) umfasst, die im ersten und im zweiten Teilbereich ist, die Verarbeitungseinheit so ausgelegt ist, dass sie die Kennung des zweiten Netzknotens, der mit der Mobilstation in Beziehung steht, aus der Speichereinheit abruft, und der Sender so ausgelegt ist, dass er die Kennung des zweiten Netzknotens an den Steuernetzknoten (CN1) sendet (3).

16. Computerprogramm, das so ausgelegt ist, dass es einen Steuernetzknoten (CN1) in einer Weise steuert, dass er die folgenden Schritte ausführt:
- Empfangen einer Aufforderung (1) zur Handhabung von Aufenthaltsinformationen, wobei die Aufforderung eine Kennung einer Mobilstation (MS) umfasst, die in einem ersten Teilbereich einer ersten Art und in einem zweiten Teilbereich einer zweiten Art ist, und die Aufforderung Informationen umfasst, von welchen eine Kennung des ersten Teilbereichs (RA1) und eine Kennung des zweiten Teilbereichs (LA1) abgeleitet werden können,
- Ableiten der Kennung des ersten Teilbereichs (RA1) von der Aufforderung (1) zur Handhabung von Aufenthaltsinformationen.
- Speichern der Kennung des ersten Teilbereichs (RA1), der mit der Mobilstation (MS) in Beziehung steht.

17. Computerprogramm, das so ausgelegt ist, dass es ein zentrales Lokalisierungsregister (CLR) in einer Weise steuert, dass es die folgenden Schritte ausführt:
- Empfangen von einem Steuernetzknoten (CN1), der so ausgelegt ist, dass er eine Kennung eines ersten Teilbereichs (RA1) einer ersten Art speichert, einer Aufforderung (2) für eine Kennung eines zweiten Netzknotens, der eine Kennung eines Teilbereichs einer zweiten Art speichert, der mit einer Mobilstation in Beziehung steht, die im ersten Teilbereich und in einem zweiten Teilbereich einer zweiten Art ist, wobei die Aufforderung eine Kennung der Mobilstation (MS) umfasst,
- Bestimmen der Kennung des zweiten Netzknotens, der mit der der Mobilstation (MS) in Beziehung steht, und
- Senden (3) der Kennung des zweiten Netzknotens an den Steuernetzknoten (CN1).

18. Computerprogrammspeichermedium, das ein Computerprogramm nach Anspruch 16 oder 17 speichert.

## Revendications

1. Procédé de gestion d'information de position d'une station mobile (MS) dans un réseau de communication dans lequel l'information de position est mémorisée selon des sous-zones du réseau de communication par des noeuds de réseau et un premier et un second type de sous-zones existent, dans lequel la station mobile est dans une première sous-zone (RA1) du premier type et dans une seconde sous-zone (LA1) du second type, un ensemble de noeuds de réseau associé à la seconde sous-zone est adapté pour mémoriser une identification de la seconde sous-zone, un noeud de réseau de commande (CN1) qui est adapté pour mémoriser une identification de la première sous-zone est associé à la station mobile, et un registre de localisation central (CLR) détient une identification d'un second noeud de réseau mémorisant une identification d'une sous-zone du second type associée à la station mobile (MS), le procédé comprenant les étapes consistant à :
- demander (1) au noeud de réseau de commande de gérer une information de position, la demande comprenant une identification de la station mobile (MS) et une information de laquelle l'identification de la première sous-zone (RA1) et l'identification de la seconde sous-zone (LA1) peuvent être déduites,
- déduire l'identification de la première sous-zone (RA1) de la demande de gestion d'information de position,
- mémoriser l'identification de la première sous-zone (RA1) associée à la station mobile (MS) par le noeud de réseau de commande (CN1),
- demander (2) au registre de localisation central (CLR) l'identification du second noeud de réseau, la demande comprenant une identification de la station mobile (MS),
- dans le registre de localisation central (CLR) déterminer l'identification du second noeud de réseau qui est associé à la station mobile,
- envoyer (3) l'identification du second noeud de réseau au noeud de réseau de commande (CN1),
- déterminer un noeud de réseau (BN1) d'après l'ensemble associé à la seconde sous-zone selon l'identification du second noeud de réseau par le noeud de réseau de commande (CN1),
- demander (4) au noeud de réseau déterminé (BN1) de mémoriser l'identification de la seconde sous-zone (LA1) associée à la station mobile (MS), et
- mémoriser l'identification de la seconde sous-zone (LA1) associée à la station mobile (MS) par le noeud de réseau déterminé (BN1).

2. Procédé selon la revendication 1, dans lequel la demande (1) de gestion d'information de position compernd l'identification de la première sous-zone (RA1) et l'identification de la seconde sous-zone (LA1) est déduite de l'identification de la première sous-zone (RA1).

3. Procédé selon la revendication 1 ou 2, dans lequel le noeud de réseau déterminé (BN1) est le second noeud de réseau.

4. Procédé selon la revendication 1 ou 2, comprenant les étapes suivantes consistant à :
- vérifier si le second noeud de réseau fait partie de l'ensemble de noeuds de réseau associés à la seconde sous-zone,
- sélectionner un noeud de réseau parmi l'ensemble de noeuds de réseau associés à la seconde sous-zone comme le noeud de réseau déterminé (BN1), si le second noeud de réseau ne fait pas partie de l'ensemble de noeuds de réseau associés à la seconde sous-zone ou si le second noeud de réseau n'est pas joignable,
- envoyer une identification du noeud de réseau déterminé (BN1) au registre de localisation central (CLR), et
- mémoriser l'identification du noeud de réseau déterminé (BN1) par le registre de localisation central (CLR).

5. Procédé selon la revendication 4, dans lequel un noeud de radioréseau (RN) est associé à la seconde sous-zone et la sélection du noeud de réseau déterminé (BN1) est faite selon une distance entre le noeud de radioréseau (RN) et le noeud de réseau déterminé (BN1).

6. Procédé selon une quelconque des revendications 4 à 5, dans lequel différents noeuds de réseau déterminés sont sélectionnés pour des stations mobiles différentes dans la seconde sous-zone.

7. Procédé selon une quelconque des revendications 1 à 6 comprenant les étapes suivantes consistant à :
- mémoriser l'identification du noeud de réseau déterminé (BN1) associé à la station mobile (MS) par le noeud de réseau de commande,
- recevoir une demande supplémentaire de gestion d'information de position par le noeud de réseau de commande,
- envoyeur une demande supplémentaire de mémorisation de l'identification de la seconde sous-zone (LA1) associée à la station mobile (MS) au noeud de réseau déterminé (BN1) par le noeud de réseau de commande, et
- mémoriser l'identification de la seconde sous-zone (LA1) associée à la station mobile (MS) par le noeud de réseau déterminé (BN1).

8. Procédé selon une quelconque des revendications 1 à 7, dans lequel:
le noeud de réseau de commande (CN1) est un noeud de support GPRS de desserte dans un réseau GPRS,
la première sous-zone (RA1) est une zone de routage du réseau GPRS, et
l'identification de la première sous-zone (RA1) est une identité de zone de routage.

9. Procédé selon une quelconque des revendications 1 à 8, dans lequel le réseau de communication est un réseau UMTS.

10. Procédé selon une quelconque des revendications 1 à 9, dans lequel
le second noeud de réseau (BN1) est un centre de commutation pour les services mobiles/ registre de localisation visiteur dans un réseau GSM,
la seconde sous-zone (LA1) est une zone de positionnement du réseau GSM, et l'identification de la seconde sous-zone (LA1) est une identité de zone de positionnement.

11. Procédé selon une quelconque des revendications 8 à 10, dans lequel l'identification de la station mobile est une identité d'abonné mobile internationale, une identité d'abonné mobile temporaire ou une identité d'abonné mobile temporaire de paquet.

12. Procédé selon une quelconque des revendications 8 à 11, dans lequel le registre de localisation central (CLR) est un registre de localisation d'origine.

13. Procédé selon une quelconque des revendications 8 à 12, dans lequel ledit procédé est mis en oeuvre pendant une procédure de rattachement GPRS/IMSI mixte ou une procédure de mise à jour de zone de routage/zone de positionnement mixte.

14. Noeud de réseau de commande (CN1) comprenant une unité de réception pour recevoir des messages, une unité de traitement pour traiter des informations et messages, et une unité d'émission pour émettre des messages, dans lequel l'unité de réception est adaptée pour recevoir une demande (1) de gestion d'information de position, la demande comprenant une identification d'une station mobile (MS) et une information de laquelle une identification d'une première sous-zone (RA1) d'un premier type et une identification d'une seconde sous-zone (LA1) d'un second type peuvent être déduites, l'unité de traitement est adaptée pour déduire l'identification de la première sous-zone (RA1) de la demande (1) de gestion d'information de position et pour mémoriser l'identification de la première sous-zone (RA1) associée à la station mobile (MS), l'unité de transmission est adaptée pour envoyer une demande (2) d'une identification d'un second noeud de réseau à un registre de localisation central (CLR), la demande comprenant l'identification de la station mobile (MS), l'unité de réception est adaptée pour recevoir (3) l'identification du second noeud de réseau, l'unité de traitement est adaptée pour déterminer un noeud de réseau (BN1) d'après un ensemble de noeuds de réseau associés à la seconde sous-zone (LA1) selon l'identification du second noeud de réseau, et l'unité de transmission est adaptée pour envoyer une demande (4) de mémorisation de l'identification de la seconde sous-zone (LA1) associée la station mobile (MS) au noeud de réseau déterminé (BN1).

15. Registre de localisation central (CLR) comprenant un récepteur pour recevoir des messages, une unité de mémorisation pour mémoriser des identités de noeuds de réseau associés aux stations mobile, une unité de traitement centrale pour traiter des informations et messages, et un émetteur pour émettre des messages, dans lequel le récepteur est adapté pour recevoir une demande (2) d'un noeud de réseau de commande (CN1) qui est adapté pour mémoriser une identification d'une première sous-zone (RA1) d'un premier type pour une identification d'un second noeud de réseau qui est adapté pour mémoriser une identification d'une seconde sous-zone (LA1) d'un second type, la demande comprenant une identification d'une station mobile (MS) étant dans la première et la seconde sous-zone, l'unité de traitement est adaptée pour extraire de l'unité de mémorisation l'identification du second noeud de réseau qui est associé à la station mobile, et l'émetteur est adapté pour émettre (3) l'identification du second noeud de réseau vers le noeud de commande de réseau.

16. Programme informatique agencé pour commander un noeud de réseau de commande (CN1) de sorte qu'il effectue les étapes consistant à :
- recevoir une demande (1) de gestion d'information de position, la demande comprenant une identification d'une station mobile (MS) étant dans une première sous-zone d'une premier type et dans une seconde sous-zone d'un second type et la demande comprenant une information de laquelle une identification de la première sous-zone (RA1) et une identification de la seconde sous-zone (LA1) peuvent être déduites,
- déduire l'identification de la première sous-zone (RA1) de la demande (1) de gestion d'information de position,
- mémoriser l'identification de la première sous-zone (RA1) associée à la station mobile (MS).

17. Programme informatique agencé pour commander un registre de localisation central (CLR) de sorte qu'il effectue les étapes consistant à :
- recevoir depuis un noeud de réseau de commande
(CN1) qui est adapté pour mémoriser une identification d'une première sous-zone (RA1) d'un premier type une demande (2) d'identification d'un second noeud de réseau mémorisant une identification d'une sous-zone d'un second type associée à une station mobile étant dans la première sous-zone et dans une seconde sous-zone d'un second type, la demande comprenant une identification de la station mobile (MS),
- déterminer l'identification du second noeud de réseau est associé à la station mobile, et
- envoyer (3) l'identification du second noeud de réseau vers le noeud de réseau de commande (CN1).

18. Support de mémorisation de programme informatique mémorisant un programme informatique selon la revendication 16 ou 17.
